# EUROPEAN PATENT APPLICATION

(11) **EP 2 299 426 A1**
(43) Date of publication of application: **23.03.2011**
(21) Application number: 09750851.9
(22) Date of filing: 21.05.2009
(51) Int. Cl.: G09F 19/00, G06Q 50/00

(54) **ADVERTISING METHOD AND A SYSTEM FOR CARRYING OUT SAID METHOD**

(30) Priority: 21.05.2008 RU 2008119958
(71) Applicant: Tkachev, Yurij Anatolyevich, Moskevskya oblast 143800 (RU)
(72) Inventor: Tkachev, Yurij Anatolyevich, Moskevskya oblast 143800 (RU)
(74) Representative: Engel, Christoph Klaus
(86) International application number: PCT/RU2009/000243
(87) International publication number: WO 2009/142542

(57) **Abstract**

The group of inventions is related to advertising and to the systems intended for presentation of the information to the users, and it makes it possible to enhance the effective output of propagation means of advertising matter and information materials as well as the efficiency of advertising impact.

The technical solution consists in setting of additional audiovisual information blocks in the information transferred to the user over the telecommunication network wherein each audiovisual information block dispatched to the user is added to the data conveyed to the user over the telecommunication network without their distortion and is displayed on the data terminal equipment (subscriber/user equipment) of the telecommunication network; adding of the audiovisual information block to the data transferred to the user is effected by way of attachment or affixation without limitation of the volumes of one or several additional information blocks and reproduction is performed continually and periodically with a duration set by an advertiser within a regulated length of time and thereat, the additional information is dispatched to the user separately from the original one, which is not modified and is accessible to the user in the form in which it was sent to him from the host containing the requested content.

To implement the claimed advertising method, the system contains the equipment providing the user with an access to the telecommunication network, the database of additional audiovisual information blocks as well as the user's inquiry and reply processing software and hardware complex which adds the additional audiovisual information block to the data conveyed to the user over the telecommunication network with a possibility of subsequent reproduction of the latter without data distortion. The user's inquiry and reply processing software and hardware complex provides a possibility of adding one or several additional audiovisual information blocks to the said data of one or several original information providers by way of attaching or affixing without limitation the volumes of one or several additional information blocks of one or several additional information providers with a possibility of multiple periodic reproduction of the latter with a preset duration within a regulated length of time. Telecommunication network is used as is the local or global computer network and reproduction is effected on the data terminal equipment (subscriber/user equipment) of the telecommunication network.

## Description

The group of inventions is related to advertising and to the systems intended for presentation of the information to the users, and it makes it possible to enhance the effective output of propagation means of advertising matter and information materials as well as the efficiency of advertising impact.

The claimed group of inventions may be used for expanding the capabilities concerning the submission of the following information to the users of global and local computer networks, namely: advertising and broadcast information messages for a user or a group of users concerning the information submitted on the user's request in text form, multimedia form or voice form.

From the state of art, there are known the methods of advertising (presentation of information) by way of setting the additional advertising audiovisual blocks in the information transferred to the user over telecommunication network (RU 10929 U1 G09F 15/00 1999, RU 6640 U1 G06F 15/00 1998).

There are also known other advertising methods consisting in inclusion of additional information blocks into the information conveyed to the user; thereat, the information blocks are included by the information service provider immediately to the information transferred to the user. Related to such methods are the following:
Setting of information of advertising nature in the body of electronic letters when a message sender uses free-of-charge mail servers; setting of information messages on the site of information services supplier;
Setting of information of advertising nature in the body of electronic letters when a message sender uses free-of-charge mail servers; setting of information messages on the site of the information service provider; setting of banners, pop-up windows and other information blocks on the site of the information service provider; setting of information by hosting service provider on the sites the owners of which use the hosting of this provider.

The following drawbacks are attributed to all these methods: 1. The information block is conveyed to the user when he visits the information resource the owner of which has set this block, only, or at the moment of receiving the message addressed to this user.
2. The information blocks are either reproduced constantly interfering with perception of the main information or require from the user the actions on their deactivation (closing of window, halting of program execution and so on).
3. The information blocks may be conveyed selectively (i.e., to a certain user audience).
4. For accumulation of audience to which there may be transferred the information blocks, they shall be set on a large number of physically different information resources.

The closest analog of the claimed group of inventions is the method of advertising consisting in that an edit message is sent from the first phone to the second phone, and it includes the phase of converter-received message transmitted by a person from the first phone. The message contains text (SMS) or multimedia (MMS) files. The converter attaches the added text, for example, the advertising text having a predetermined length, to the original text of known length. The target text obtained as a result of integration of the original text and added text is thereafter encoded with the message former attributes and sent to the phone as a text containing the added message and original text (claim W003088690). To ensure a possibility of adding the additional blocks to the user data, the format of the specified data envisages a white space for allocation of these additional blocks in the composed message intended for the user who receives this message. Thus, on the one hand, the volume of transmitted additional information block is limited and, on the other hand, because of the necessity of leaving white spaces for additional information, the volume of the data transmitted to the user is limited as well, which reduces the efficiency of the said facilities. Besides, when reproducing the original information, the additional information is constantly indicated thus creating a psychological tension, i.e., discomfort for the user, and this reduces the efficiency of advertising impact.

The technical result that this invention was aiming to reach consists in enhancing the efficiency of advertising matter and information material propagation means as well as enhancing the advertising impact and realizing the method of presenting the additional information to the user of data transmission network within a period during which the data is received by the user from the said network without change of the content of original information received by the user irrespective of the volume and location of the original and additional information.

The technical result is achieved by the fact that in the advertising method which consists in setting the additional audiovisual blocks in the information conveyed to the user over the telecommunication network and during which each audiovisual information block dispatched to the user is added to the data transmitted to the user over the telecommunication network without their distortion and they are reproduced on the data terminal equipment (subscriber/user equipment) of the telecommunication network; adding of the audiovisual information block to the data transmitted to the user is implemented by attaching or affixing without limitation the volumes of one or several additional information blocks, and reproduction is performed continually and periodically with a duration set by an advertiser within a regulated length of time and thereat, the additional information is dispatched to the user separately from the original one, it is not modified and is accessible to the user in the form in which it was sent to him from the host containing the requested content.

To implement the claimed advertising method, the system contains the equipment providing the user with an access to the telecommunication network, the database of additional audiovisual information blocks as well as the user's inquiry and reply processing software and hardware complex which adds the additional audiovisual information block to the data conveyed to the user over the telecommunication network with a possibility of subsequent reproduction of the latter without data distortion. The user's inquiry and reply processing software and hardware complex provides a possibility of adding one or several additional audiovisual information blocks to the said data of one or several original information providers by way of attaching or affixing without limitation the volumes of one or several additional information blocks of one or several additional information providers with a possibility of multiple periodic reproduction of the latter with a preset duration within a regulated length of time. Telecommunication network is used as the local or global computer network and reproduction is effected on the data terminal equipment (subscriber/user equipment) of the telecommunication network.

The examples of executing this method are illustrated by graphic materials.

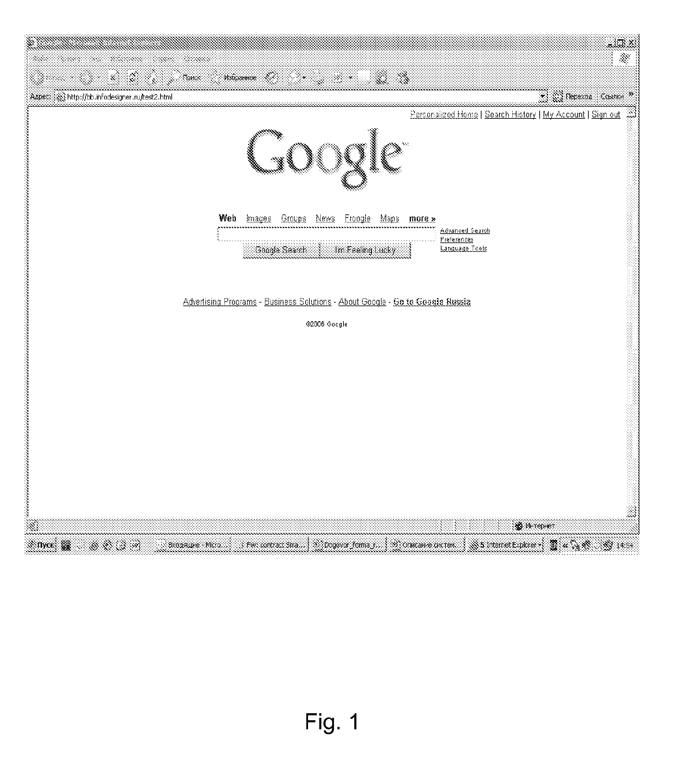

Shown in Fig. 1 is the original page of user-requested information.

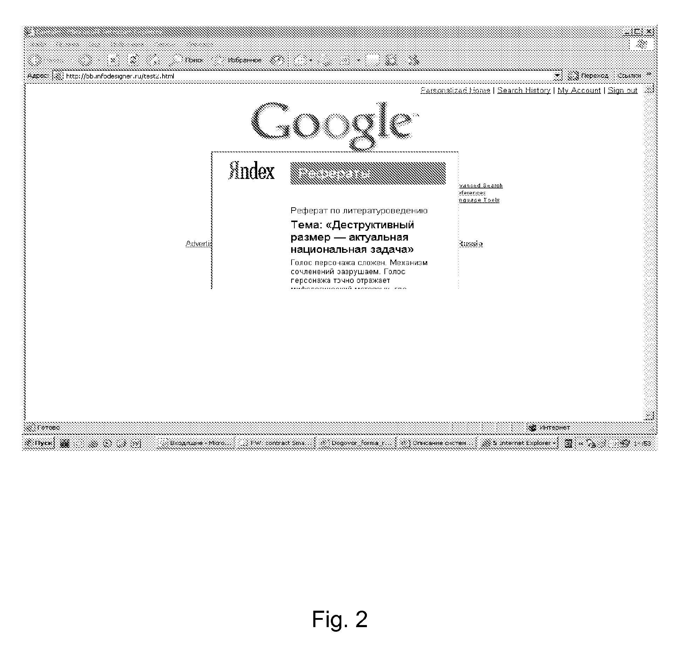

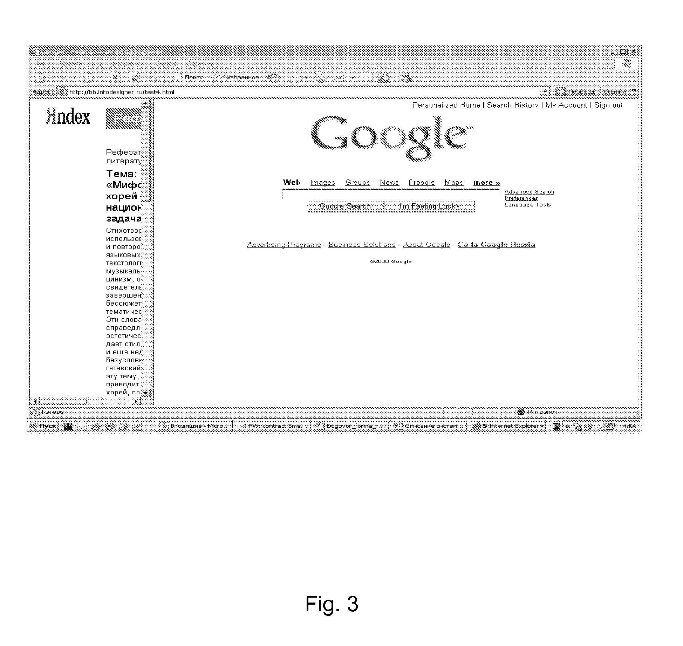

Shown in Figs 2 and 3 is the original page with additional information block.

The equipment of the provider giving access to the local or global computer network for the user is additionally outfitted with software-hardware (software or hardware) complex processing the user's inquiries and replies.

The information block containing the additional information is entered into the database (or another information storage).

When the user's inquiries and replies containing the information requested by the user for reproduction (display) pass over the software-hardware (software or hardware) complex, the additional information blocks not requested by the user are attached to the data conveyed to the user from the information service provider. Thereat, the background information is not distorted, i.e., the reply is modified by adding thereto the information block from the database (or another information storage).

When receiving the reply with requested information, the software of the data terminal equipment (subscriber/user equipment) of the telecommunication network reproduces (displays) the received reply and also, there is reproduced (displayed) the additional information from the information block.

Special software-hardware complex is connected to the data transmission channel through which the information is delivered to the user(s); this complex adds the additional information blocks, which are temporarily displayed (reproduced) on the data terminal equipment (subscriber/user equipment) of the telecommunication network, to the information transmitted toward the user.

The contents of the information blocks are determined by the owner of this complex. Each reply containing the audiovisual information and dispatched toward the user is analyzed for a possibility of including the additional information (information block) thereto and, if such a possibility exists and if the rules of displaying such an information block are observed (frequency of display, time of day, date, number of displays, contents of requested information), this information block is added to the reply received by the user. The adding procedure is affected by attachment or affixation. Thereat, the volumes of additional information blocks are not limited.

The information block is included into the information submitted to the user irrespective of the information resource to which the user has addressed.

The information block is physically stored in one place and it may be updated (modified, eliminated, added) host-centrically. The information block is displayed temporarily, namely: periodically with a preset duration within a regulated length of time, which does not hinder a perception of the main information by the user.

The information block may be dispatched to all the users employing the channel to which the software-hardware (software or hardware) complex is connected.

Examples of executing the method are as follows:

### Example 1.

When opening the Web page requested by the user with the help of the browser, there is formed an information block of arbitrary form on top of the page content (see Figs 1 and 2).

### Example 2.

When opening the Web page requested by the user with the help of the browser, there is formed a page with frames and the content of requested page is placed into one of the frames and additional information from the information blocks is placed into the remaining frames (See Figs 1 and 3).

The efficiency of feeding the information is increased and a possible psychological tension is also excluded since the additional information is displayed (reproduced) for the user temporarily.

There is ensured a high actuality and accessibility of the information material, simplification of information spreading technology, enhancement of convenient using and effective spreading of the information.

## Claims

1. Method of advertising by way of setting the additional audiovisual information blocks in the information conveyed to the user over the telecommunication network and, in this approach, each audiovisual information block dispatched to the user is added to the data conveyed to the user over the telecommunication network without their distortion and they are displayed on the data terminal equipment (subscriber/ user equipment) of the telecommunication network, **characterized in that** adding of the audiovisual information block to the data conveyed to the user is effected by way of attaching or affixing without limitation the volumes of one or several additional information blocks, and reproduction is performed continually and periodically with a duration set by an advertiser within a regulated length of time; thereat, the additional information is dispatched to the user separately from the original one, which is not modified and is accessible to the user in the form in which it was sent to him from the host containing the requested content.

2. System used for executing the method of claim 1, contains the equipment providing the user with an access to the telecommunication network, as well as it contains the database of additional audiovisual information blocks and software-hardware complex for processing the user's requests and replies by adding the additional audiovisual information block to the data conveyed to the user over the telecommunication network with a possibility of subsequent reproduction of the latter without data distortion, **characterized in that** the software-hardware complex used for processing the user's requests and replies features a possibility of adding one or several additional audiovisual information blocks to the said data of one or several original information providers by way of attaching or affixing without limitation the volumes of additional information block of one or several additional information providers with a possibility of multiple and periodic reproduction of the latter with a preset duration; telecommunication network is used as is the local or global computer network, and reproduction is effected on the data terminal equipment (subscriber/user equipment) of the telecommunication network.
